# EUROPÄISCHE PATENTSCHRIFT

(11) **EP 1 255 399 B1**
(45) Veröffentlichungstag und Bekanntmachung des Hinweises auf die Patenterteilung: **20.07.2005**
(21) Anmeldenummer: 01110876.8
(22) Anmeldetag: 04.05.2001
(51) Int. Cl.: H04M 17/00, G07F 7/02, G07F 7/08, G07F 19/00

(54) **Verfahren und Anordnung zur Vergebührung eines Dienstes**
Method and arrangement for billing of services
Procédé et dispositif pour la taxation de services

(43) Veröffentlichungstag der Anmeldung: 06.11.2002
(73) Patentinhaber: SIEMENS AKTIENGESELLSCHAFT, 80333 München (DE)
(72) Erfinder: Hausmann, Ruediger, Dr., 82377 Penzberg (DE); Moritz, Peter, 85540 Haar (DE)

(56) Entgegenhaltungen:
- EP-A- 0 921 487
- WO-A-00/77747
- WO-A-01/26389
- WO-A-99/56254
- CA-A- 2 218 587
- US-A- 6 061 664

## Beschreibung

Die Erfindung betrifft ein Verfahren sowie eine Vorrichtung nach dem Oberbegriff des Anspruches 1.

Es sind verschiedene Verfahren zur Vergebührung von Diensten in einem Daten- bzw. Telekommunikationssystem, insbesondere den Mobilfunknetzen und dem Internet, aus dem Stand der Technik bekannt. Üblicherweise werden Dienste mittels Kreditkartenzahlung, Überweisung oder Barzahlung auf ein Konto eines Dienstanbieters bzw. -betreibers (Serviceproviders) bezahlt. Die Kosten werden dabei vielfach in Abhängigkeit von der in Anspruch genommenen Zeit der Dienstleistung in Rechnung gestellt. In einer weiteren Form der Vergebührung werden Gebühren in Abhängigkeit von einer transferierten Datenmenge erhoben. Auch eine gemischte Vergebührung, die Zeitdauer und Datenmenge berücksichtigt, gehört zum Stand der Technik.

Aus der Druckschrift WO 00/77747 ist bereits eine Möglichkeit für vorvergebührten Internet-Zugang beschrieben. Der Kunde muss bei Zugriff auf einen Dienst eine Konto-Nummer, beispielsweise auch die Kreditkarten-Nummer angeben. Diese Nummer kann auch auf einer speziell dafür geeigneten Karte abgespeichert sein. Die Abrechnung des Dienstes geschieht zeit- oder mengengesteuert.

Der Umfang der Dienstleistungen ist abhängig vom Serviceangebot des Dienstanbieters. Zu einfachen Dienstleistungen zählt die Bereitstellung einer Verbindung zwischen einer Bereitstellungseinrichtung des Dienstanbieters und dem Endgerät des Nutzers über eine Datenleitung und eine weitere Verbindung (Anbindung) über entsprechende Gateways zu einem Datennetz - üblicherweise dem Internet. Weitere Serviceleistungen, wie z.B. E-Mail, Zugang zu News-Foren und Speicherplatz für persönliche Daten und/oder für die Aufstellung einer HTML-Seite im Internet (Homepage), gehören üblicherweise ebenfalls zum Umfang eines von Serviceprovidern bereitgestellten Leistungspakets.

Vorteile der Einzelvergebührung sind insbesondere in der sekundengenauen Abrechnung, auf Wunsch detaillierten Dienstleistungsnachweisen pro Abrechnungszeitraum und in der Möglichkeit einer Einwahl beim Dienstanbieter über jede beliebige Telekommunikationseinrichtung zu finden.

Eine in jüngerer Zeit beliebte Form der Vergebührung ist die sogenannte Flatrate, wobei in bestimmten Zeitabständen - vorzugsweise monatlich - ein fester Betrag an den Dienstanbieter überwiesen wird, mit dem all dessen Leistungen für den relevanten Zeitraum abgegolten werden. Weitere Möglichkeiten, insbesondere für Privatkunden, liegen in der Einrichtung einer Grundgebühr in Verbindung mit einer nutzungszeitabhängigen Gebühr oder in einer ausschließlich nutzungszeitabhängigen Gebühr - also ohne Grundgebühr - aufgrund eines vorausbezahlten Guthabens (Prepaid).

Die Abrechnung über eine Flatrategebühr erweist sich als unflexibel, da diese immer für einen vorab bestimmten, festen Nutzungszeitraum vereinbart wird. Variieren jedoch die Nutzungsgewohnheiten des Benutzers, so müssen neue Pauschalvereinbarungen bezüglich der Nutzungszeit getroffen werden. Dieser Abschluß neuer Vereinbarungen hat sich jedoch für den Dienstanbieter als zeit- und kostenintensiv erwiesen. Auch für den Benutzer sind Änderungen im Rahmen der bestehenden Vergebührungssysteme zeitaufwendig und unbequem.

Die bekannten Prepaid-Systeme hingegen ermöglichen eine durchaus flexible Inanspruchnahme der vorausbezahlten Dienstleistung(en) über einzelne Zugriffe, die auch jeweils einzeln vergebührt werden. Die Dienste werden auf diese Weise jedoch relativ teuer bezahlt, was breite Kreise von Dienstnutzern oder potentiellen Nutzern davon abhält, sich eines Prepaid-Guthabens zu bedienen. Darüber hinaus agieren viele Dienstnutzer, die gleichwohl mit Prepaidkonten bzw. -karten arbeiten, betont kostenbewußt - begrenzen also ihre Zugriffszeiten auf ein Minimum.

Es ist aber ein Ziel der Anbieter von Internetdiensten, wie z.B. Internetauktionen, Onlinebanking oder Onlinewarenhäusern, daß möglichst viele Benutzer einen zeitlich ausgedehnten - möglichst permanenten - Zugang zum Internet besitzen, da die Benutzer dann in der Regel längere Zeit im Internet aktiv sind und somit tendenziell höhere Umsätze erwirtschaftet werden können.

Es ist Aufgabe der vorliegenden Erfindung, ein Verfahren zur Vergebührung von Diensten in einem Kommunikations- bzw. Datennetz anzugeben, welches Kostenvorteile für Vielnutzer bietet und einfach und flexibel vom Nutzer selbst auf seine spezifischen aktuellen Bedürfnisse anpaßbar ist, sowie eine entsprechende Vorrichtung bereitzustellen.

Diese Aufgabe wird verfahrensseitig durch ein Verfahren mit den Merkmalen des Anspruches 1 und in ihrem Vorrichtungsaspekt durch eine Anordnung mit den Merkmalen des Anspruchs 11 gelöst.

Ein wesentlicher Gedanke des erfindungsgemäßen Verfahrens besteht darin, einen flexiblen Ablauf zu schaffen, der beim Abschluß eines Vertrages zwischen dem Dienstanbieter und dem Benutzer über die Buchung des Dienstes bzw. der Dienste einstellbar ist und den Benutzer vom Zwang zur Vorab-Festlegung auf starre Vergebührungsformen und Nutzungszeiten befreit. Dabei wird ein Prepaid-Guthaben flexibel handhabbar ausgestaltet, so daß eine differenziert und abhängig von den jeweiligen Lebensumständen des Benutzers gestaltete Inanspruchnahme der Dienstleistung(en) möglich ist.

Die vorgeschlagene Lösung sieht vor, daß im Rahmen einer Anmeldung des Nutzers beim Dienstbetreiber-Server einer Mehrzahl zulässiger Vergebührungsmodi vereinbart wird, die in einer Liste in Zuordnung zu einem Vergebührungsmodus-Code gespeichert sind. Will der Nutzer einen bestimmten - bevorzugt ebenfalls aus einer vorbestimmten Menge verfügbarer Dienste ausgewählten - Dienst nutzen, so entscheidet er sich für einen Vergebührungsmodus und gibt beim Aufruf des Dienstes an seinem Endgerät den entsprechenden Code ein. Aufgrund dieses Codes kann im Dienstbetreiber-Server anhand der erwähnten Liste der dem gewünschten Nutzungsumfang entsprechende, vom Prepaid-Guthaben des Nutzers abzubuchende Guthabenbetrag gefunden werden.

Nachdem geprüft wurde, ob der aktuelle Guthabenstand diesen Guthabenbetrag deckt, wird im Dienstbetreiber-Server eine Abbuchung und zugleich die Freischaltung des gewünschten Dienstes für den hiermit bezahlten Nutzungsumfang vorgenommen. Es kann sich hierbei um einen bestimmten (kalendarischen) Zeitraum, also beispielsweise einen Tag, eine Woche oder einen Monat usw. oder auch eine (mengenmäßig bestimmte) Zeitdauer, also beispielsweise 24 oder 100 Nutzungsstunden, oder um eine vorbestimmte transferierbare Datenmenge, also z. B. 100 kByte, 10 MB, 1 GB usw., handeln.

Eine praktisch (und wirtschaftlich) besonders bedeutsame Anwendung der vorgeschlagenen Lösung ist die Vergebührung des Zugangs zum Internet über einen Festnetz-Telefonanschluß oder ein Mobilfunk-Endgerät, also auf HTTP- oder WAP-Basis. Die Lösung - die kurz als "Prepaid Flatrate" bezeichnet werden kann - ist aber auch für den Zugang zu Intranets oder Datenbasen im allgemeinsten Sinne, also einschließlich Musik-, Video- oder Spiele-Datenbanken, die von sogenannten Content-Anbietern betrieben werden, nutzbar. Die Gebührenhöhe, d. h. der für einen bestimmten Nutzungsumfang pauschal abgebuchte Guthabenbetrag, wird in Abhängigkeit von der Art des Dienstes ziel-spezifisch festgelegt.

Eine gewisse Spezifik wird zweckmäßigerweise auch für die auswählbaren Vergebührungsmodi gelten: So wird für die Gewährung des Zugangs zum Internet wahrscheinlich das Angebot von verschiedenen zeitbezogenen sowie auch datenmengenbezogenen Vergebührungsmodi sinnvoll sein, während die Inanspruchnahme der Dienste eines Content-Anbieters eher datenmengenbezogen abzurechnen sein wird. Entsprechend diesen verschiedenen Möglichkeiten, wird der Betreiber-Server in der Regel sowohl einen Zeitgeber als auch einen Datenmengenzähler für den jeweiligen Nutzer vorhalten und diesem auch einen Speicherbereich zur Speicherung des sich aus dem abgebuchten Guthabenbetrag ergebenden End-Zeitpunktes bzw. End-Zählerstandes zuordnen. Es versteht sich, daß bei einer am Nutzungsumfang (Netto-Nutzungszeit oder Datenmenge) orientierten Vergebührung der Zeitgeber bei Beendigung eines Zugriffs angehalten und bei einem erneuten Aufruf des Dienstes am vorher erreichten Stand wieder gestartet wird und der Zählerstand des Datenmengenzählers bei Zugriffs-Unterbrechungen erhalten bleibt.

Ist der gespeicherte End-Zeitpunkt bzw. End-Zählerstand erreicht, wird im Betreiber-Server ein Steuersignal erzeugt, welches verschiedene Funktionen auslösen kann. Zum einen - und aus diesseitiger Sicht vor allem - bewirkt dieses Steuersignal eine Umschaltung auf Einzelvergebührung bei jeder weiteren Nutzung des Dienstes (sofern und solange nicht eine weitere Pauschal-Vergebührung in Kraft tritt). Alternativ hierzu kann das Steuersignal eine Sperrung des Nutzerzugriffs auf den Dienst bewirken.

Beide Varianten sind mit der Absendung einer Nachricht an das Nutzer-Endgerät zu kombinieren, mit der der Nutzer über den Ablauf der pauschal vergebührten Nutzungszeit oder die Erschöpfung der durch die Pauschal-Vergebührung bezahlten transferierten Datenmenge informiert wird. Er kann dann von sich aus durch einen erneuten Aufruf einen weiteren Pauschalvergebührungs-Vorgang initiieren. Alternativ hierzu kann bei Anmeldung des Nutzers bei dem (Vergebührungs-)Dienst auch eine Festlegung dahingehend getroffen werden, daß jeweils nach Verbrauch eines pauschal abgebuchten Guthabenbetrages ein weiteres, gleicher Betrag unter Fortschreibung des ursprünglich vereinbarten Vergebührungsmodus abgebucht wird - solange, bis das Prepaid-Guthaben erschöpft ist.

Das vorgeschlagene Verfahren (und die entsprechende Anordnung) kann als Zusatzdienst eines Service- oder Content-Providers bei diesem selbst realisiert sein, also auf einem Betreiber-Server, über den auch die Bereitstellung des Zugangs oder der gewünschten Daten erfolgt. Gleichermaßen ist aber auch eine Realisierung als eigenständiger Dienst für "fremde" Service- bzw. Content-Provider möglich. Im letzteren Falle übernimmt der Dienstbetreiber-Server des Vergebührungsdienstes die für die Ausführung der Erfindung wichtigen Informationsübertragungs-, -verarbeitungs- und -prüfungsvorgänge und realisiert die (elektronischen) Guthaben-Übertragungen und die Freischaltung (bzw. Sperrung) des Zugangs zum Service- bzw. Content-Provider für den Nutzer, hat jedoch nichts mit der Erbringung des eigentlich vom Nutzer in Anspruch genommenen Dienstes zu tun.

Es versteht sich, daß den oben genannten Verfahrensaspekten in einer zur Ausführung der Erfindung geeigneten Anordnung Anordnungs- bzw. Systemaspekte entsprechen, zumal die Realisierung in einer hybriden Software- und Hardware-Konfiguration erfolgen wird. Diese Vorrichtungsaspekte werden daher hier nicht nochmals vollständig erwähnt, es wird aber auf einige wesentliche Vorrichtungsaspekte hingewiesen. Zu diesen zählen einerseits geeignete Eingabemittel zur Installation des elektronischen Guthabens (und gegebenenfalls zur Eingabe von Identifikations- bzw. Authentisierungsdaten) am Nutzer-Endgerät, beispielsweise eine Kartenleseeinrichtung zum Lesen einer Magnetstreifen- oder Chipkarte oder ein fest installierter nicht-flüchtiger Speicher. Im einfachsten Fall sind die Eingabemittel durch eine Tastatur oder auch die Sprechkapsel eines Telefons realisiert, mit denen der Nutzer beispielsweise eine Kreditkartennummer eingeben kann (was allerdings aus Sicherheitsgründen nicht die bevorzugte Ausführung darstellt).

Auf Seiten des Dienstbetreiber-Servers korrespondiert hierzu in der bevorzugten Ausführung eine Speichereinrichtung, in der nutzerbezogen das jeweilige elektronische Guthaben selbst oder ein den aktuellen Guthabenstand repräsentierender Datensatz für die im Rahmen der Erfindung erforderlichen Prüfungs- und Transfervorgänge gespeichert ist.

Desweiteren sind im Dienstbetreiber-Server die erforderlichen Verarbeitungs- und Speichereinrichtung zur Registrierung des Aufrufes eines pauschal vergebührten Dienstes, einschließlich des Lesens des Vergebührungsmodus-Codes, zur Prüfung des Guthabens und zur Ausführung der erforderlichen Guthaben-Transfers und die bereits oben kurz erwähnten Meß- und Speichermittel zur Erfassung der pauschal vergebührten Zeiten bzw. Datenmengen sowie eine Signalgebereinrichtung zur Ausgabe des das Ende der Pauschal-Vergebührung kennzeichnenden Signals vorgesehen.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren. Von diesen zeigen:
Fig. 1 eine Prinzipskizze zur Illustration der Erfindung und
Fig. 2 ein Funktions-Blockschaltbild eines Ausführungsbeispiels der erfindungsgemäßen Anordnung.

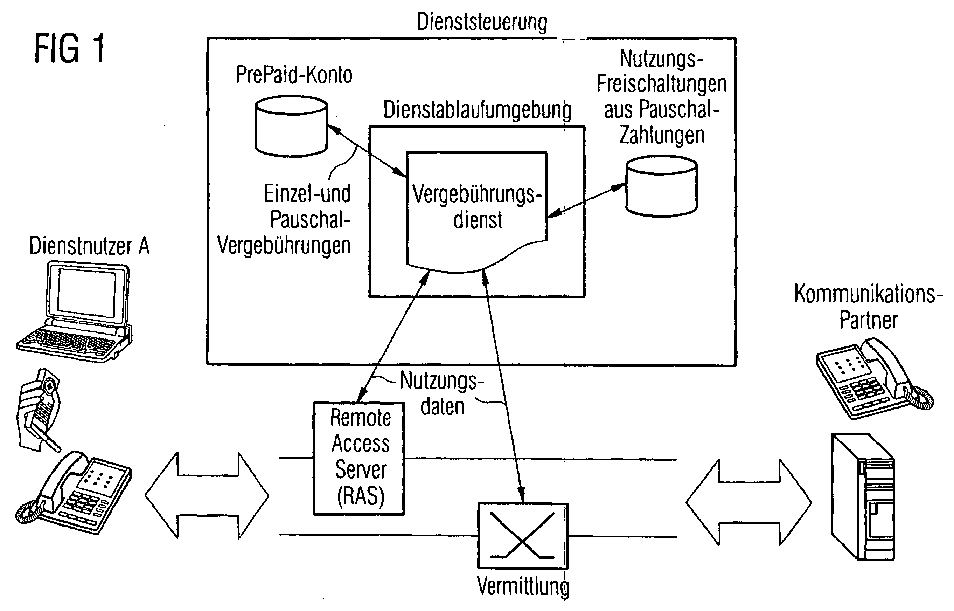

In Fig. 1 ist illustrativ dargestellt, daß ein Dienstnutzer A über eines von mehreren Nutzer-Endgeräten (Festnetz-Telefon, Mobiltelefon oder Laptop) über ein verknüpftes Telekommunikations- und Datennetz - und zwar speziell über eine (symbolisch als Kopplungsnetz dargestellte) Vermittlungseinrichtung oder einen Zugangsserver bzw. Remote-Access-Server (RAS) - Zugang zu einem Kommunikationspartner erlangen möchte. Dieser ist symbolisch als weiteres Festnetz-Telefon oder Server dargestellt. Dieser Zugang ist kostenpflichtig und soll für den Dienstnutzer A nach dem erfindungsgemäßen Verfahren unter Nutzung eines bei einem Vergebührungs-Dienst geführten Prepaid-Kontos in leicht und flexibel einstellbarer Weise realisiert werden.

Der Vergebührungs-Dienst hat hierzu eine Dienststeuerung, die auf einem eigenen Dienstbetreiber-Server realisiert ist und über eine Dienstablaufumgebung über Einzel- und Pauschalvergebührungen die vom Dienstnutzer A gewünschten Zugriffe bei Aufruf realisiert. Wie oben allgemein erläutert, wird hierbei nach Anmeldung des Dienstnutzers A für eine Pauschal-Vergebührung aus seinem Prepaid-Konto die Freischaltung von Nutzungen aus Pauschalzahlungen über den RAS bzw. die Vermittlung gemäß einem vom Dienstnutzer eingegebenen konkreten Vergebührungsmodus realisiert. Während des Zeitraums der Pauschal-Vergebührung werden Einzelvergebührungen unterdrückt.

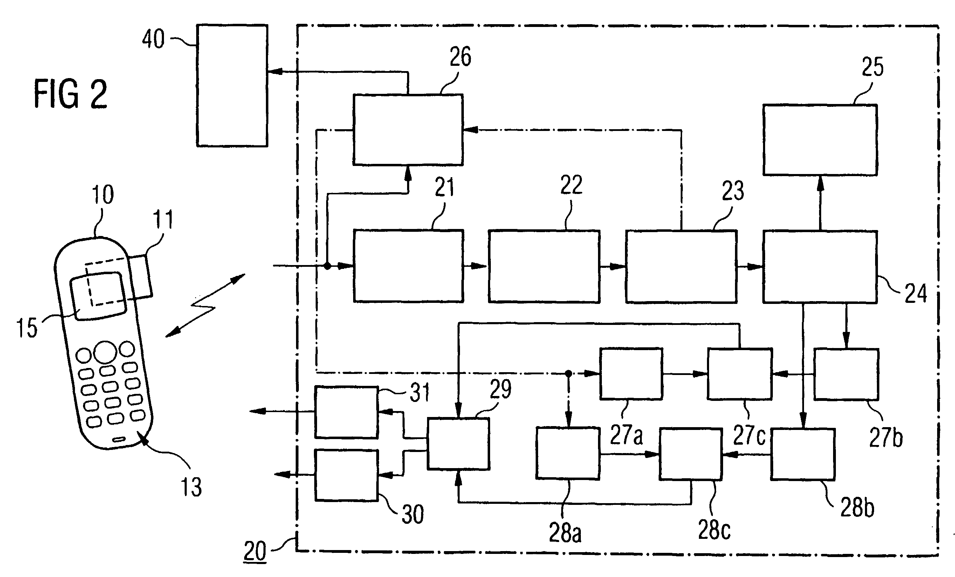

Fig. 2 zeigt in Form eines Funktions-Blockschaltbildes schematisch wesentliche für die Ausführung der Erfindung in einem bevorzugten Beispiel eingesetzte Funktionskomponenten eines Mobilfunk-Endgerätes 10 und eines Dienstbetreiber-Servers 20, über die ein Zugriff des Nutzers zu einem WAP-Dienst mittels einer "Prepaid Flatrate-Vergebührung" realisiert wird.

Das Mobilfunk-Endgerät 10 ist ein weitgehend herkömmliches SIMLock-Mobiltelefon mit einer Prepaid-Karte 11, einer Eingabetastatur 13 und einem Display 15, über die Eingaben des Nutzers im Rahmen einer durch den Dienstbetreiber gelieferten Menüführung zur Vergebührung des WAP-Zugangs erfolgen. Die Verbindung zwischen dem Mobilfunk-Endgerät 10 und dem Dienstbetreiber-Server 20 wird über ein herkömmliches, deshalb hier nicht dargestelltes Mobilfunknetz hergestellt, an das der Dienstbetreiber-Server über einen - ebenfalls nicht dargestellten - Gateway-Server angeschlossen ist.

Der Dienstbetreiber-Server 20 hat eine Empfangseinrichtung 21 zum Empfang eines Subskriptions-Anrufes vom Mobilfunk-Endgerät 10, wobei der Empfangseinrichtung 21 eine Dekodierstufe 22 zur Dekodierung eines durch den Nutzer an der Eingabetastatur 13 des Mobilfunk-Endgerätes 10 eingegebenen Vergebührungsmodus-Code nachgeschaltet ist. Weiterhin hat der Dienstbetreiber-Server 20 eine Guthaben-Prüfeinheit 23 zur Prüfung des auf der Prepaid-Karte 11 des Mobilfunk-Endgerätes 10 aktuell befindlichen vorausbezahlten Guthabens und eine Guthaben-Übertragungseinheit 24 zur Abbuchung eines durch den Vergebührungsmodus-Code vorbestimmten Guthabenbetrages von der Prepaid-Karte des Nutzers in einen Guthabenspeicher 25. Dessen Spezifikation entspricht im Falle der Anordnung nach Fig. 1 Festlegungen die zwischen dem Betreiber des Vergebührungsdienstes und dem vom Dienstnutzer angerufenen Kommunikationspartner (Service- oder Content-Provider) getroffen werden.

Die Guthaben-Prüfeinheit 23 oder alternativ die Guthaben-Übertragungseinheit 24 steht in Signalverbindung mit einer Schaltstufe 26 zur Freischaltung einer Verbindung zwischen dem Mobilfunk-Endgerät 10 und einem Provider-Server 30 eines Internet-Providers. Die Schaltstufe 26 gibt nach einem positivem Ergebnis der Prüfung des Guthabens auf der Prepaid-Karte 11 bzw. im Ansprechen an eine erfolgte Guthabenübertragung für einen durch den Vergebührungsmodus-Code bestimmten Nutzungszeitraum oder -umfang dem Nutzer einen keiner Einzelvergebührung unterliegenden Zugriff zum Provider-Server 30 und sperrt diesen Zugang wieder, sobald der mit der Abbuchung des vorbestimmten Guthabenbetrages abgegoltene Nutzungszeitraum oder -umfang abgelaufen bzw. erreicht ist.

Ein Zeitgeber 27a und ein Nutzungszeitspeicher 27b dienen zur Erfassung des Zeitpunktes, zu dem ein vereinbarter Nutzungszeitraum abgelaufen ist, und ein Datenmengenzähler 28a und ein Datenmengen-Grenzwertspeicher 28b dienen zur Erfassung des Zeitpunktes, zu dem eine vereinbarte transferierbare Datenmenge erreicht ist. Entsprechende Vergleichereinheiten 27c und 28c geben dann ein Signal an einen Steuersignalgenerator 29, der seinerseits ein Steuersignal zur Umschaltung von Pauschal- auf Einzelvergebührung an eine Vergebührungs-Umschalteinheit 30 sowie zur Benachrichtigung des Benutzers über den Ablauf der Pauschalvergebührung an eine Sendeeinheit 31 ausgibt.

In dieser - stark vereinfachten - Darstellung wurde (unrealistisch) angenommen, daß die Subskription des Pauschalvergebührungs-Dienstes sowie die Vergebührung beim Dienstbetreiber-Server 20 und der Zugriff zum Provider-Server 40 während einer einzelnen, zusammenhängenden Verbindung erfolgen. In der Praxis sind die genannten Funktionseinheiten derart ausgestaltet, daß aufgrund einer einmal erfolgten Subskription eine Mehrzahl von Guthaben-Abbuchungsvorgängen und nach einem Guthaben-Abbuchungsvorgang (im Rahmen des vereinbarten Nutzungsumfanges) eine Mehrzahl von erneuten Zugriffen zum Provider-Server 40 möglich ist.

Die Ausführung der Erfindung ist nicht auf das oben beschriebene Beispiel beschränkt, sondern ebenso in einer Vielzahl von Abwandlungen möglich, die im Rahmen fachgemäßen Handelns liegen.

## Patentansprüche

1. Verfahren zur Vergebührung eines durch einen Dienstbetreiber bereitgestellten Dienstes **(Vergebührungsdienst),** in einem Telekommunikations- bzw. Datennetz aufgrund eines vorausbezahlten elektronischen Guthabens eines Nutzers, **dadurch gekennzeichnet, dass folgende** Schritte **durchgeführt werden:**
a) Anmeldung und Installation des vorausbezahlten elektronischen Guthabens **(PrePaid-Konto)** bei dem Dienstbetreiber seitens des Nutzers im Rahmen einer Telekommunikationsverbindung zwischen einem Nutzer-Endgerät und einem Dienstbetreiber-Server,
b) Aufruf des oder eines vom Dienstbetreiber bereitgestellten, pauschal vergebührten Dienstes durch den Nutzer unter Übermittlung eines Vergebührungsmodus-Codes zur Kennzeichnung einer gewünschten Pauschalvergebührung für die Nutzung des aufgerufenen Dienstes für einen bestimmten Zeitraum oder Zeitumfang oder Datenumfang, über das Nutzer-Endgerät,
c) Registrierung des Aufrufes und Prüfung des Guthabens des Nutzers in Bezug auf den Vergebührungsmodus-Code in einer Verarbeitungseinheit **(23)** des Dienstbetreiber-Servers,
d) Abbuchung eines vorbestimmten elektronischen Guthabenbetrages als Pauschalgebühr vom gespeicherten Guthaben des Nutzers gemäß dem Vergebührungsmodus-Code,
e) Freischaltung des Zugriffs auf den Dienst durch das Nutzer-Endgerät,
f) Start eines dem Nutzer zugeordneten Zeitgebers **(27a)** oder Datenmengenzählers **(28a)** beim Dienstbetreiber-Server unter Speicherung eines dem abgebuchten Guthabenbetrag entsprechenden End-Zeitpunktes bzw. End-Zählerstandes in einem dem Nutzer zugeordneten Speicherbereich und
g) Ausgabe eines Steuersignals bei Erreichung des gespeicherten End-Zeitpunktes bzw. End-Zählerstandes durch den Zeitgeber oder Datenmengenzähler.

2. Verfahren nach Anspruch 1,
**dadurch gekennzeichnet, daß**
mindestens die Schritte a) und b), im Rahmen einer ersten Verbindung zwischen dem Nutzer-Endgerät und dem Dienstbetreiber-Server im Rahmen einer Menüführung ausgeführt werden.

3. Verfahren nach Anspruch 1 oder 2,
**dadurch gekennzeichnet, daß**
das im Schritt g) ausgegebene Steuersignal eine Umschaltung auf Einzelvergebührung jeder weiteren Nutzung des Dienstes steuert.

4. Verfahren nach Anspruch 1 oder 2,
**dadurch gekennzeichnet, daß**
das im Schritt g) ausgegebene Steuersignal eine Sperrung des Nutzerzugriffs auf den Dienst steuert.

5. Verfahren nach einem der vorangehenden Ansprüche,
**dadurch gekennzeichnet, daß**
das im Schritt g) ausgegebene Steuersignal die Absendung einer Nachricht an das Nutzer-Endgerät steuert.

6. Verfahren nach einem der vorangehenden Ansprüche,
**dadurch gekennzeichnet, daß**
der Schritt a) zugleich für eine Mehrzahl definierter Zugangsrufnummern bzw. -adressen eines oder mehrerer Nutzer-Endgeräte ausgeführt wird.

7. Verfahren nach einem der vorhergehenden Ansprüche,
**dadurch gekennzeichnet, daß**
die Schritte a) und c) bis g) bei einem bzw. durch einen ersten Dienstanbieter eines Subskriptions/Vergebührungsdienstes ausgeführt werden, während im Schritt b) ein Dienst eines Zugriffs-Providers oder Content-Anbieters aufgerufen wird.

8. Verfahren nach einem der vorangehenden Ansprüche,
**dadurch gekennzeichnet, daß**
mindestens das elektronische Guthaben, aus einer mit einem nicht-flüchtigen Speicher ausgestatteten Zugangskarte **(11)** am Nutzer-Endgerät gelesen wird.

9. Verfahren nach einem der Ansprüche 1 bis 7,
**dadurch gekennzeichnet, daß**
mindestens das elektronische Guthaben, aufgrund von Eingaben am Nutzer-Endgerät **(10)** in einem Guthaben- und wahlweise Identifikationsdaten-Speicher **(25)** des Dienstbetreiber-Servers **(20)** gespeichert wird.

10. Verfahren nach einem der vorangehenden Ansprüche,
**dadurch gekennzeichnet, daß**
aufgrund einer speziellen Eingabe im Schritt a) im Anschluß an den Schritt g) die Schritte c) bis f) automatisch wiederholt ausgeführt werden, solange das vorausbezahlte elektronische Guthaben die jeweils abzubuchenden Guthabenbeträge deckt.

11. Anordnung zur Durchführung des Verfahrens nach einem der vorangehenden Ansprüche, mit
mindestes einem Kunden-Endgerät (10) mit Eingabemitteln (11, 13) zur Eingabe von Daten zur Installation oder zum Lesen eines vorausbezahlten elektronischen Guthabens und
einem mit dem Kunden-Endgerät über ein Telekommunikations- bzw. Datennetz verbindbaren Dienstbetreiber-Server (20) **gekennzeichnet durch**
- Mittel (21, 22) zur Registrierung des Aufrufes eines pauschal vergebührten Dienstes, einschließlich des Lesens eines Vergebührugnsmodus-Codes,
- mit den Registrierungsmitteln verbundenen Mittel (23) zum Prüfen des elektronischen Guthabens des Nutzers zur Deckung eines sich aus dem gelesenen Vergebührungsmodus-Code ergebenden abzubuchenden Guthabenbetrages,
- mit den Registrierungsmitteln verbundenen Abbuchungsmittel (24, 25) zur Abbuchung des Guthabenbetrages vom elektronischen Guthaben,
- Schaltmitteln (26) zur Freischaltung des Zugriffs **durch** das Nutzer-Endgerät bei positivem Prüfungsergebnis entsprechend dem Vergebührungsmodus,
- Zeitgeber- oder Datenzählermittel (27a, 28a) zur Erfassung eines Nutzungszeitraumes bzw. einer Nutzungszeitdauer oder einer im Rahmen des Dienstes an das Nutzer-Endgerät übertragenen Datenmenge, wobei die Zeitgeber- oder Datenzählermittel bei jedem Aufruf des Dienstes über das Nutzer-Endgerät von dem am Ende eines vorhergehenden Zugriffs erreichten Stand weiterlaufen,
- mit den Registrierungsmitteln verbundenen Speichermittel (27b, 28b) zur Speicherung eines aus dem Vergebührungsmodus-Code und wahlweise dem Zeitgeber- bzw. Zähleranfangsstand bestimmten Zeitgeber- bzw. Zähler-Endstandes und
- mit den Zeitgeber- bzw. Zählermitteln und den Speichermitteln verbundene Vergleicher- und Signalgebermittel (27c, 28c, 29) zur Ausgabe eines Steuersignals bei Erreichung des Endstandes.

12. Anordnung nach Anspruch 11,
**dadurch gekennzeichnet, daß**
die Eingabemittel am Nutzer-Endgerät eine Kartenleseeinrichtung zum Lesen einer Magnetstreifen- oder Chipkarte umfassen.

13. Anordnung nach Anspruch 11,
**dadurch gekennzeichnet, daß**
die Eingabemittel (11, 13) am Nutzer-Endgerät einen fest installierten nicht-flüchtigen Speicher (11) umfassen.

14. Anordnung nach einem der Ansprüche 11 bis 13,
**dadurch gekennzeichnet, daß**
die Signalgebermittel (29) mit einer Vergebührungs-Steuereinrichtung (30) zur Umschaltung von Pauschal- auf Einzelvergebührung verbunden sind.

15. Anordnung nach einem der Ansprüche 11 bis 14,
**dadurch gekennzeichnet, daß**
die Signalgebermittel (29) mit einer Sendeeinrichtung (31) zur Absendung einer Nachricht an das Nutzer-Endgerät verbunden sind.

16. Anordnung nach einem der Ansprüche 11 bis 15,
**dadurch gekennzeichnet, daß**
einem Nutzer-Endgerät mit Eingabemitteln zur Installation bzw. zum Lesen des elektronischen Guthabens mehrere Zugangs-Rufnummern bzw. -adressen und wahlweise weitere Endgerät ohne gesonderte Guthaben-Eingabemittel zugeordnet sind.

17. Anordnung nach einem der Ansprüche 11 bis 16,
**dadurch gekennzeichnet, daß**
im Dienstbetreiber-Server ein Guthabenspeicher zur Speicherung des vorausbezahlten elektronischen Guthabens oder einer Information über den Guthabenstand vorgesehen ist, der in Signalverbindung mit den Abbuchungsmitteln steht.

18. Anordnung nach einem der Ansprüche 11 bis 17,
**dadurch gekennzeichnet, daß**
beim Nutzer-Endgerät und/oder Betreiber-Server Guthabenüberwachungsmittel zur Überwachung des Standes des vorausbezahlten elektronischen Guthabens und zur Ausgabe eines Warnsignals bei Unterschreitung eines vorbestimmten Schwellwertes vorgesehen sind.

## Claims

1. Method for charging for a service which is provided by a service operator (charging service) in a telecommunications and data network on the basis of a prepaid electronic credit associated with a user, **characterized in that** the following steps are carried out:
a) the prepaid electronic credit (prepaid account) is registered and installed with the service operator by the user in the course of a telecommunications connection between a user terminal and a service operator server,
b) the or a service provided by the service operator for an all-inclusive charge is requested by the user by using the user terminal to transmit a charging mode code to identify that all-inclusive charging is desired for the use of the requested service for a particular period of time or amount of time or amount of data,
c) the request is registered and the user's credit is checked in relation to the charging mode code in a processing unit (23) associated with the service operator server,
d) a predetermined electronic credit sum is debited as an all-inclusive charge from the user's stored credit on the basis of the charging mode code,
e) the user terminal is given access to the service,
f) a timer (27a) or data volume counter (28a) associated with the user is started on the service operator server and an end time or end counter reading corresponding to the debited credit sum is stored in a memory area associated with the user, and
g) a control signal is output when the timer or data volume counter reaches the stored end time or end counter reading.

2. Method according to Claim 1,
**characterized in that**
at least steps a) and b) are performed under menu guidance in the course of a first connection between the user terminal and the service operator server.

3. Method according to Claim 1 or 2,
**characterized in that**
the control signal which is output in step g) controls changeover to single-item charging for all further use of the service.

4. Method according to Claim 1 or 2,
**characterized in that**
the control signal which is output in step g) controls blocking of user access to the service.

5. Method according to one of the preceding claims,
**characterized in that**
the control signal which is output in step g) controls the sending of a message to the user terminal.

6. Method according to one of the preceding claims,
**characterized in that**
step a) is performed simultaneously for a plurality of defined access call numbers or addresses for one or more user terminals.

7. Method according to one of the preceding claims,
**characterized in that**
steps a) and c) to g) are performed with or by a first service provider providing a subscription/charging service, while in step b) a service from an access provider or content provider is requested.

8. Method according to one of the preceding claims,
**characterized in that**
at least the electronic credit is read from an access card (11) equipped with a non-volatile memory on the user terminal.

9. Method according to one of Claims 1 to 7,
**characterized in that**
at least the electronic credit is stored in a credit and, optionally, identification data memory (25) on the service operator server (20) on the basis of inputs on the user terminal (10).

10. Method according to one of the preceding claims,
**characterized in that**,
on the basis of a specific input in step a), following step g), steps c) to f) are automatically performed repeatedly while the prepaid electronic credit covers the respective credit sums which are to be debited.

11. Arrangement for carrying out the method according to one of the preceding claims, having
at least one customer terminal (10) having input means (11, 13) for inputting data for installing or for reading a prepaid electronic credit, and
a service operator server (20) which can be connected to the customer terminal via a telecommunications and data network, **characterized by**
- means (21, 22) for registering the request for a service which is subject to an all-inclusive charge, including reading a charging mode code,
- means (23) connected to the registration means for the purpose of checking the user's electronic credit for coverage of a credit sum to be debited which is obtained from the charging mode code read,
- debiting means (24, 25) connected to the registration means for the purpose of debiting the credit sum from the electronic credit,
- switching means (26) for enabling access by the user terminal when the result of the check is positive on the basis of the charging mode,
- timer or data counter means (27a, 28a) for recording a period of use or a length of use or a data volume transmitted to the user terminal within the context of the service, where the timer or data counter means continue to run from the reading reached at the end of a previous instance of access whenever the service is requested using the user terminal,
- memory means (27b, 28b) connected to the registration means for the purpose of storing an end timer or counter reading determined from the charging mode code and optionally from the start timer or counter reading, and
- comparator and signal generator means (27c, 28c, 29) connected to the timer or counter means and to the memory means for the purpose of outputting a control signal when the end reading is reached.

12. Arrangement according to Claim 11,
**characterized in that**
the input means on the user terminal comprise a card reader for reading a magnetic strip card or chip card.

13. Arrangement according to Claim 11,
**characterized in that**
the input means (11, 13) on the user terminal comprise a permanently installed non-volatile memory (11).

14. Arrangement according to one of Claims 11 to 13,
**characterized in that**
the signal generator means (29) are connected to a charging control device (30) for the purpose of changing over from all-inclusive charging to single-item charging.

15. Arrangement according to one of Claims 11 to 14,
**characterized in that**
the signal generator means (29) are connected to a transmission device (31) for sending a message to the user terminal.

16. Arrangement according to one of Claims 11 to 15,
**characterized in that**
a user terminal having input means for installing and for reading the electronic credit has an associated plurality of access call numbers or addresses, and optionally further terminals with no separate credit input means.

17. Arrangement according to one of Claims 11 to 16,
**characterized in that**
the service operator server contains a credit memory for storing the prepaid electronic credit or information about the credit level, which credit memory has a signal connection to the debiting means.

18. Arrangement according to one of Claims 11 to 17,
**characterized in that**
the user terminal and/or operator server are/is provided with credit monitoring means for monitoring the level of the prepaid electronic credit and for outputting a warning signal if there is a drop below a predetermined threshold value.

## Revendications

1. Procédé pour la taxation d'un service **(service de taxation)** mis à disposition par un prestataire de services dans un réseau de télécommunication resp. dans un réseau de données en raison d'un avoir électronique prépayé d'un usager, **caractérisé en ce que** les étapes suivantes sont exécutées :
a) demande et installation de l'avoir électronique prépayé **(Compte PrePaid)** auprès du prestataire de services, de la part de l'usager, dans le cadre d'une connexion de télécommunication entre un terminal d'usager et un serveur du prestataire de services,
b) appel, par l'usager, du service ou d'un service mis à disposition et taxé de manière forfaitaire par le prestataire de services, par transmission d'un code du mode de taxation, pour caractériser une taxation forfaitaire souhaitée pour l'utilisation du service appelé pour une certaine période de temps ou un certain volume de temps ou volume de données par l'intermédiaire du terminal d'usager,
c) enregistrement de l'appel et vérification de l'avoir de l'usager, en rapport avec le code du mode de taxation, dans une unité de traitement **(23)** du serveur du prestataire de services
d) prélèvement d'un montant prédéterminé de l'avoir électronique en tant que taxe forfaitaire de l'avoir mémorisé de l'usager, selon le code du mode de taxation,
e) ouverture de l'accès au service par le terminal de l'usager,
f) démarrage, dans le serveur du prestataire de services, d'une horloge de comptage **(27a)** ou d'un compteur de volume de données **(28a)** affecté(e) à l'usager, par mémorisation d'un moment final resp. d'une position finale du compteur correspondant au montant prélevé de l'avoir dans une zone de mémoire affectée à l'usager et
g) sortie d'un signal de commande lorsque le moment final mémorisé resp. la position finale du compte mémorisée est atteinte par l'horloge de comptage ou par le compteur de volume de données.

2. Procédé selon la revendication 1,
**caractérisé en ce**
**qu'**au moins les étapes a) et b) sont exécutées dans le cadre d'une première connexion entre le terminal de l'usager et le serveur du prestataire de services dans le cadre d'une assistance par menus.

3. Procédé selon la revendication 1 ou 2,
**caractérisé en ce**
**que** le signal de commande sorti à l'étape g) commande une commutation sur une taxation individuelle de chaque autre utilisation du service.

4. Procédé selon la revendication 1 ou 2,
**caractérisé en ce**
**que** le signal de commande sorti à l'étape g) commande un blocage de l'accès de l'usager au service.

5. Procédé selon l'une quelconque des revendications précédentes,
**caractérisé en ce**
**que** le signal de commande sorti à l'étape g) commande l'émission d'un message au terminal de l'usager.

6. Procédé selon l'une quelconque des revendications précédentes,
**caractérisé en ce**
**que** l'étape a) est exécutée en même temps pour une pluralité de numéros d'appels d'accès resp. d'adresses d'appels d'accès définies d'un ou de plusieurs terminaux de l'usager.

7. Procédé selon l'une quelconque des revendications précédentes,
**caractérisé en ce**
**que** les étapes a) et c) à g) sont exécutées dans un premier resp. par un premier prestataire de services d'un service de souscription/taxation, alors qu'à l'étape b) un service d'un fournisseur d'accès ou d'un fournisseur de contenus est appelé.

8. Procédé selon l'une quelconque des revendications précédentes,
**caractérisé en ce**
**qu'**au moins l'avoir électronique est lu sur le terminal de l'usager à partir d'une carte d'accès **(11)** munie d'une mémoire non volatile.

9. Procédé selon l'une quelconque des revendications 1 à 7,
**caractérisé en ce**
**qu'**au moins l'avoir électronique est mémorisé dans une mémoire d'avoir et, au choix, dans une mémoire de données d'identification **(25)** du serveur **(20)** du prestataire de services en raison d'entrées sur le terminal de l'usager **(10)**.

10. Procédé selon l'une quelconque des revendications précédentes,
**caractérisé en ce**
**qu'**en raison d'une entrée spéciale à l'étape a), succédant à l'étape g), les étapes c) à f) sont exécutées en étant répétées automatiquement, tant que l'avoir électronique prépayé couvre les montants respectifs à prélever sur l'avoir.

11. Dispositif pour la réalisation du procédé selon l'une quelconque des revendications précédentes, comprenant
au moins un terminal de client (10) muni de moyens de saisie (11, 13), pour l'entrée de données destinées à l'installation ou à la lecture d'un avoir électronique prépayé, et d'un serveur (20) du prestataire de services, pouvant être connecté au terminal de client par l'intermédiaire d'un réseau de télécommunication resp. d'un réseau de données, **caractérisé par**
- des moyens (21, 22) pour l'enregistrement de l'appel d'un service taxé forfaitairement, y compris la lecture d'un code de mode de taxation,
- des moyens (23) raccordés aux moyens d'enregistrement, destinés à la vérification de l'avoir électronique de l'usager pour couvrir un montant de l'avoir à prélever, résultant du code lu du mode de taxation,
- des moyens de prélèvement (24, 25) raccordés aux moyens d'enregistrement, destinés au prélèvement du montant de l'avoir électronique,
- des moyens de commutation (26) pour libérer l'accès au moyen du terminal de l'usager en cas de résultat positif de la vérification, conformément au mode de taxation,
- des moyens d'horloge de comptage ou de compteur de données (27a, 28a) pour saisir une période de temps d'utilisation resp. une durée d'utilisation ou une quantité de données transmises au terminal de l'usager dans le cadre du service, les moyens d'horloge de comptage ou de compteur de données continuant de marcher à chaque appel du service par l'intermédiaire du terminal de l'usager à partir de la position atteinte à la fin d'un accès précédent,
- des moyens de mémorisation (27b, 28b) raccordés aux moyens d'enregistrement, pour mémoriser une position finale d'horloge de comptage resp. une position finale de compteur déterminée par le code du mode de taxation et, au choix, par la position de début de l'horloge de comptage resp. du compteur et
- des moyens de comparateur et de générateur de signaux (27c, 28c, 29) raccordés aux moyens d'horloge de comptage resp. de compteur et aux moyens de mémorisation, pour la sortie d'un signal de commande lorsque la position finale est atteinte.

12. Dispositif selon la revendication 11,
**caractérisé en ce**
**que** les moyens de saisie sur le terminal de l'usager comprennent un dispositif de lecture de cartes pour lire une carte à bandes magnétiques ou une carte à puce.

13. Dispositif selon la revendication 11,
**caractérisé en ce**
**que** les moyens de saisie (11, 13) sur le terminal de l'usager comprennent une mémoire (11) non volatile, installée de manière fixe.

14. Dispositif selon l'une quelconque des revendications 11 à 13,
**caractérisé en ce**
**que** les moyens de générateur de signaux (29) sont raccordés à un dispositif de commande de taxation (30) pour commuter de la taxation forfaitaire à la taxation individuelle.

15. Dispositif selon l'une quelconque des revendications 11 à 14,
**caractérisé en ce**
**que** les moyens de générateur de signaux (29) sont raccordés à un dispositif d'émission (31) pour l'émission d'un message au terminal de l'usager.

16. Dispositif selon l'une quelconque des revendications 11 à 15,
**caractérisé en ce**
**que** plusieurs numéros d'appel d'accès resp. plusieurs adresses d'accès, et au choix d'autres terminaux sans moyens particuliers de saisie d'avoir, sont affecté(e)s à un terminal de l'usager comprenant des moyens de saisie pour l'installation resp. la lecture de l'avoir électronique.

17. Dispositif selon l'une quelconque des revendications 11 à 16,
**caractérisé en ce**
**qu'**une mémoire d'avoir pour la mémorisation de l'avoir électronique prépayé ou d'une information sur l'état de l'avoir est prévue dans le serveur du prestataire de services, cette mémoire étant en liaison de signalisation avec les moyens de prélèvement.

18. Dispositif selon l'une quelconque des revendications 11 à 17,
**caractérisé en ce**
**que** des moyens de contrôle de l'avoir sont prévus dans le terminal de l'usager et/ou dans le serveur du prestataire pour le contrôle de l'état de l'avoir électronique prépayé et pour la sortie d'un signal d'avertissement, lorsqu'une valeur de seuil inférieure prédéfinie est dépassée.
